# EUROPÄISCHE PATENTSCHRIFT

(11) **EP 3 919 233 B1**
(45) Veröffentlichungstag und Bekanntmachung des Hinweises auf die Patenterteilung: **03.07.2024**
(21) Anmeldenummer: 21000105.3
(22) Anmeldetag: 16.04.2021
(51) Int. Cl.: B25J 15/04

(54) **TRENNBARER ADAPTER II**
SEPARABLE ADAPTER II
ADAPTATEUR SÉPARABLE II

(30) Priorität: 13.05.2020 DE 102020002859
(43) Veröffentlichungstag der Anmeldung: 08.12.2021
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- WO-A1-89/04893
- DE-A1-102013 008 952
- DE-A1-102016 115 740
- DE-U1-202012 100 384

## Beschreibung

Die Erfindung betrifft eine Arbeitsvorrichtung mit einer mindestens einen Industrieroboter tragenden Tragvorrichtung, wobei am Industrieroboter ein erstes Teil eines aus diesem ersten Teil und einem lösbar mit diesem verbindbaren zweiten Teil bestehenden trennbaren Adapters angeordnet ist, wobei auf der Tragvorrichtung mindestens ein Magazin mit einer Vielzahl von Werkzeugaufnahmen angeordnet ist, wobei in mindestens einer Werkzeugaufnahme ein werkzeugtragendes zweites Teil des trennbaren Adapters sitzt, wobei das zweite Teil mindestens ein mittels eines Federelements zum Hintergreifen des ersten Teils belastbares verschwenkbares oder verschiebbares Verriegelungsteil aufweist und wobei die Werkzeugaufnahme das Federelement belastet.

Aus der DE 10 2018 132 990 A1 ist eine verfahrbare Arbeitsvorrichtung mit einem Industrieroboter bekannt.

Die WO 89/04893 A1 offenbart eine verfahrbare Arbeitsvorrichtung mit einer Handhabungsvorrichtung und mit einem Werkzeugwechsler. Die einzelne Werkzeugeinheit wird mit einer Steckkupplung und einer federbelasteten Schiebemuffe an der Handhabungsvorrichtung gehalten.

Nach der DE 20 2012 100 384 U1 wird eine Steckkupplung mittels eines Schiebers formschlüssig gesichert.

Der vorliegenden Erfindung liegt die Problemstellung zugrunde, die Flexibilität der Arbeitsvorrichtung zu erhöhen.

Diese Problemstellung wird mit den Merkmalen des Hauptanspruches gelöst. Dazu weist das zweite Teil mindestens zwei federbelastete Verriegelungsteile auf, wobei jedes der Verriegelungsteile jeweils ein Führungselement umgreift. Außerdem ist jedes der Führungselemente formschlüssig in jeweils einer Führungselementaufnahme des ersten Teils aufnehmbar.

Die Arbeitsvorrichtung ist nicht ortsfest angeordnet. Sie hat eine Tragvorrichtung, einen Industrieroboter und einen integrierten Werkzeugwechsler. Damit kann die Arbeitsvorrichtung an variablen Orten und für unterschiedliche Handhabungs- und/oder Bearbeitungsaufgaben eingesetzt werden. Der Werkzeugwechsler ermöglicht hierbei den alternativen Einsatz einer Vielzahl von Werkzeugen.

Weitere Einzelheiten der Erfindung ergeben sich aus den Unteransprüchen und der nachfolgenden Beschreibung schematisch dargestellter Ausführungsformen.
- Figur 1:: Trennbarer Adapter;
- Figur 2:: Unteransicht des Festteils;
- Figur 3:: Draufsicht des Festteils;
- Figur 4:: Grundkörper des Festteils;
- Figur 5:: Einsatzstück;
- Figur 6:: Unteransicht des Losteils;
- Figur 7:: Losteilkörper;
- Figur 8:: Verriegelungsteil;
- Figur 9:: Erstes Führungselement;
- Figur 10:: Zweites Führungselement;
- Figur 11:: Querschnitt des Adapters durch die Verriegelungsteile;
- Figur 12:: Losteil mit einer Betätigung;
- Figur 13:: Unteransicht des Losteils aus Figur 12;
- Figur 14:: Seitenansicht des Losteils aus Figur 12;
- Figur 15:: Schnitt A-A aus Figur 14;
- Figur 16:: Arbeitsvorrichtung;
- Figur 17:: Magazin;
- Figur 18:: Werkzeugaufnahme;
- Figur 19:: Greifwerkzeug;
- Figur 20:: Variante eines Greifwerkzeugs.

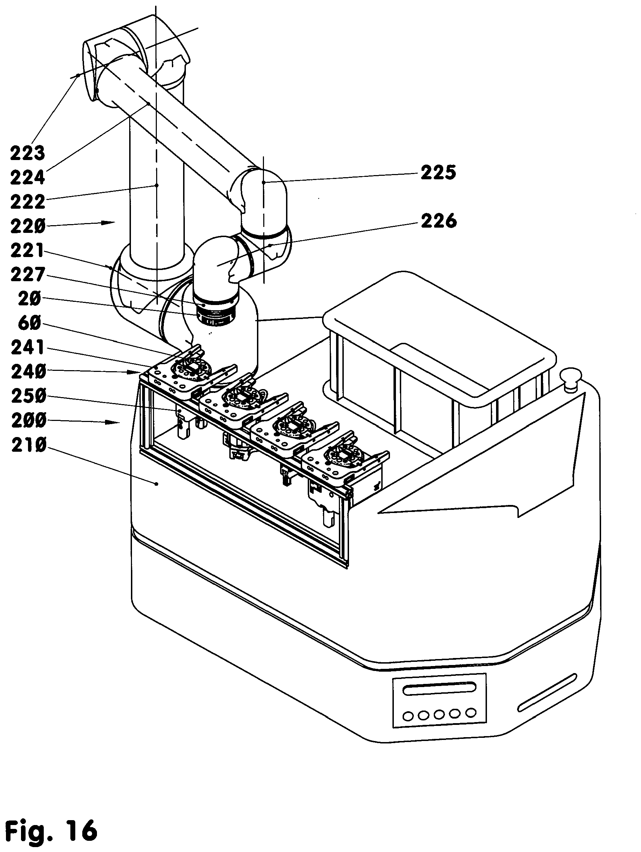

Die Figur 16 zeigt eine Arbeitsvorrichtung (200). Die Arbeitsvorrichtung (200) kann beispielsweise zum Handhaben von Werkstücken oder Stückgütern, zum Bearbeiten von Werkstücken oder zum Messen und Prüfen von Werkstücken eingesetzt werden. Sie weist eine Tragvorrichtung (210) auf, auf der ein Industrieroboter (220) und ein Magazin (240) angeordnet sind.

Die Tragvorrichtung (210) ist im Ausführungsbeispiel ein nicht weggebundenes fahrerloses Transportsystem. Sie hat Laufräder, die mittels eines in der Tragvorrichtung (210) angeordneten Fahrantriebs antreibbar sind. Der Fahrantrieb und/oder die Laufräder sind arretierbar ausgebildet, sodass die Arbeitsvorrichtung (200) nach einer Positionierung z.B. in einer Halle ihre Position auch unter der Einwirkung von Betriebskräften beibehält.

Das Steuern des Fahrens der Arbeitsvorrichtung (200) erfolgt beispielsweise mittels einer internen und/oder einer externen Steuerung der Tragvorrichtung (210). Beim Einsatz einer externen Steuerung werden z.B. einzelne Wegmarken per Funk an die Arbeitsvorrichtung (200) übertragen. Die Arbeitsvorrichtung (200) weist ein Positions- und Lageerkennungsmodul auf. Dieses ermöglicht beispielsweise während des Fahrens einen ständigen Soll-Ist-Vergleich der Position und der Lage der Arbeitsvorrichtung (200) im Raum. Bei der Ankunft an einem Arbeitsort, z.B. an einem Werkstücklager, ermöglicht das Positions- Lageerkennungsmodul, eine Ausgangslage der Arbeitsvorrichtung (200) für die Handhabungsaufgabe festzulegen oder zu überprüfen. Auch das Anfahren eines oder mehrerer Referenzpunkte z.B. mittels des Industrieroboters (220) und/oder der Tragvorrichtung (210) zur Festlegung der Ausgangsposition ist denkbar.

Die Tragvorrichtung (210) kann auch weg- und/oder schienengebunden ausgebildet sein. Auch ist es denkbar, die Tragvorrichtung (210) ohne Fahrantrieb auszubilden. Beispielsweise wird die Arbeitsvorrichtung (200) dann zur Positionsänderung geschoben oder gezogen. Die Tragvorrichtung (210) kann auch Stellfüße haben. In diesem Fall wird die Arbeitsvorrichtung (200) beispielsweise mittels eines externen Manipulators oder eines Hallenkrans transportiert.

In und an der Tragvorrichtung (210) können Energiespeicher und Steuerungsmodule für die gesamte Arbeitsvorrichtung (200) angeordnet sein. Damit kann die Arbeitsvorrichtung (200) energetisch autonom ausgebildet sein.

Der Industrieroboter (220) ist im Ausführungsbeispiel ein Sechs-Achs-Roboter. Die drei Hauptachsen (221, 222, 223), das sind die A-Achse (221), die B-Achse (222) und die C-Achse (223) sind rotatorische Achsen, sodass der Industrieroboter (220) eine RRR-Kinematik aufweist. Die erste Nebenachse (224), die D-Achse (224), ist eine translatorische Achse. Die beiden nachfolgenden Nebenachsen (225, 226), die E-Achse (225) und die F-Achse (226), sind rotatorische Achsen. Mittels der F-Achse (226) ist ein Handteller (227) drehbar gelagert. Auch ein anderer Aufbau des Industrieroboters (220), z.B. in der Bauform eines Portalroboters, eines Standsäulenroboters, eines Polarroboters, eines SCARA-Roboters, etc. ist denkbar. Auf der Tragvorrichtung (210) können mehrere Industrieroboter (220) angeordnet sein.

Am letzten Glied der kinematischen Kette des Industrieroboters (220), dem Handteller (227), ist ein erstes Teil (20) eines trennbaren Adapters (10) befestigt. Im Ausführungsbeispiel sind der Handteller (227) und das erste Teil (20) des Adapters (10) mittels Schrauben verbunden.

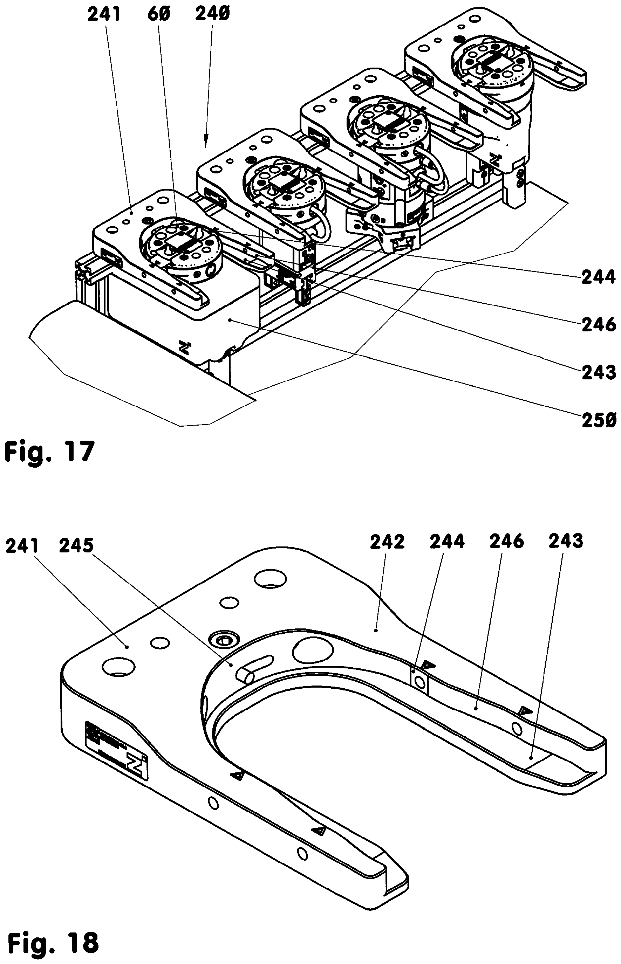

Das Magazin (240) ist im Ausführungsbeispiel fest auf der Tragvorrichtung (210) angeordnet. Beispielsweise ist es starr mit dieser verbunden. Es ist aber auch denkbar, das Magazin (240) als bewegliches Umlaufmagazin oder als Kettenmagazin auszubilden. Das Magazin (240) hat eine Vielzahl von Werkzeugaufnahmen (241), von denen in den Darstellungen der Figuren 16 und 17 vier Werkzeugaufnahmen (241) dargestellt sind. Die einzelnen Werkzeugaufnahmen (241) sind im Ausführungsbeispiel nebeneinander angeordnet. Es ist auch denkbar, z.B. auf beiden Seiten der Tragvorrichtung (210) Magazine (240) anzuordnen. Auch eine Anordnung mehrere Magazine (240) in unterschiedlichen Ebenen ist denkbar. Beispielsweise können die Werkzeugaufnahmen (241) aller Magazine (240) mittels des vom Handteller (227) getragenen ersten Teils (20) des Adapters (10) erreicht werden. Das im Ausführungsbeispiel dargestellte Magazin (240) ist beispielsweise energiefrei. Es ist auch denkbar, im Magazin (240) eine Werkzeuglageerkennung und/oder eine Werkzeugidentifikation anzuordnen.

Die Figur 18 zeigt eine einzelne Werkzeugaufnahme (241). Diese ist U-förmig ausgebildet. Sie hat an beiden Schenkeln (242) des U eine Tragschiene (243). Die beiden Tragschienen (243) sind weitgehend parallel zueinander ausgebildet. Oberhalb der Tragschiene (243) ist im Ausführungsbeispiel jeweils eine Betätigungsleiste (244) angeordnet. In dem an den Boden (245) des U angrenzenden Bereich sind die beiden Betätigungsleisten (244) parallel zueinander ausgebildet. Der Abstand der Betätigungsleisten (244) zueinander ist größer als der Abstand der Tragschienen (243) zueinander. In dem dem Boden (245) abgewandten Bereich hat die Werkzeugaufnahme (241) beidseitig eine schräg ausgebildete Einführschiene (246). Der Abstand der beiden einander gegenüberliegenden Einführschienen (246) zueinander nimmt mit zunehmendem Abstand vom Boden (245) zu. Die Einführschienen (246) sind jeweils in der Betätigungsleiste (244) ausgebildet.

In den Werkzeugaufnahmen (241) sind zweite Teile (60) des Adapters (10) gelagert. Beispielsweise trägt jedes zweite Teil (60) ein Werkzeug (250). Hierbei ist das zweite Teil (60) mit dem Werkzeug (250) verschraubt. Das jeweilige Werkzeug (250) kann ein Handhabungswerkzeug (250), ein Bearbeitungswerkzeug, ein Messwerkzeug, etc. sein.

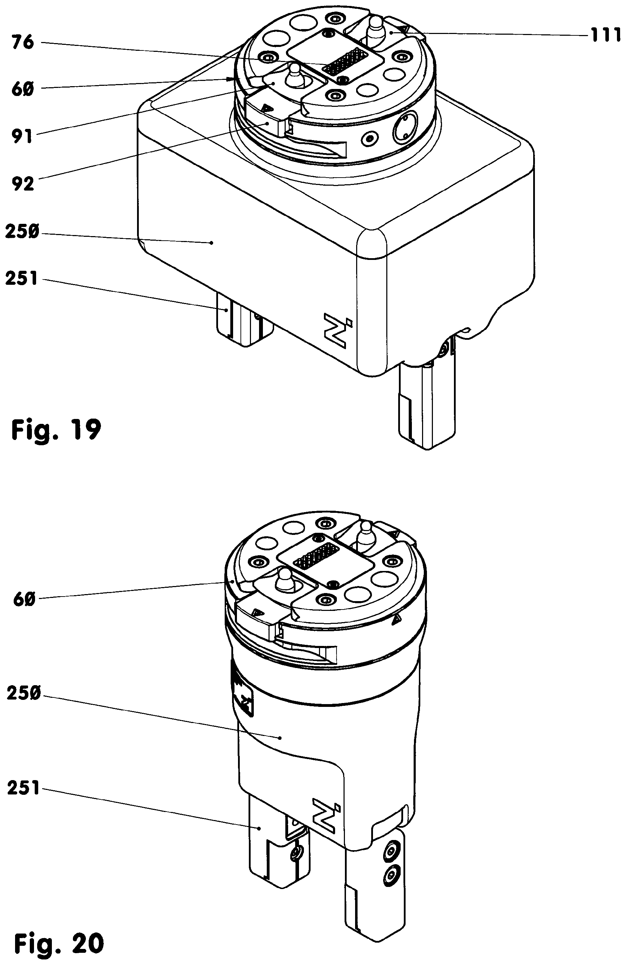

Die Figuren 19 und 20 zeigen jeweils ein zweites Teil (60), das jeweils ein Werkzeug (250) in der Bauform eines Handhabungswerkzeugs (250) trägt. Das einzelne, in diesen Figuren 19 und 20 dargestellte Handhabungswerkzeug (250) ist ein Greifer, z.B. ein Parallelgreifer. Die beiden Handhabungswerkzeuge (250) haben unterschiedlich ausgebildete Greifwerkzeuge (251), einen unterschiedlichen Greifhub, etc. Die beiden Handhabungswerkzeuge (250) werden daher für unterschiedliche Greifaufgaben eingesetzt.

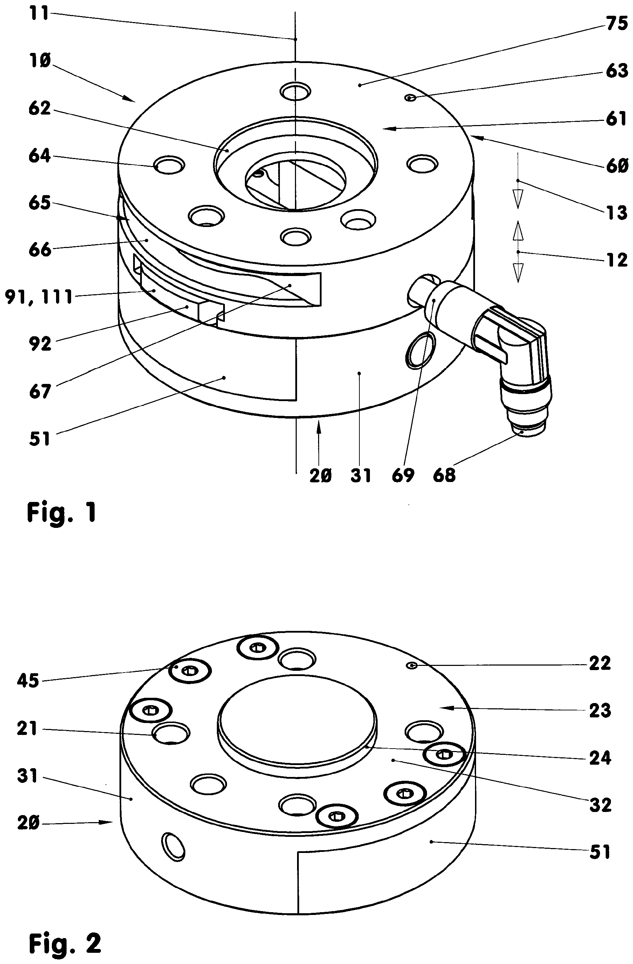

Die Figuren 1 - 11 zeigen einen trennbaren Adapter (10) und einige seiner Einzelteile. Derartige Adapter (10) werden eingesetzt, um einzelne Werkzeuge austauschbar an einem Industrieroboter zu befestigen. Die Werkzeuge können Handhabungswerkzeuge, Bearbeitungswerkzeuge, Messwerkzeuge, Kameras, etc. sein. Handhabungswerkzeuge sind beispielsweise Greifwerkzeuge, Schiebewerkzeuge, Ziehwerkzeuge, etc. Diese können elektrisch, pneumatisch oder hydraulisch betätigt sein. Bearbeitungswerkzeuge sind beispielsweise spanende oder spanlose Werkzeuge, z.B. Fräser, Bohrer, Sägen, Biegestempel, etc.

Der trennbare Adapter (10) hat ein erstes Teil (20) und ein am ersten Teil (20) lösbar angeordnetes zweites Teil (60). Das erste Teil (20), das z.B. als Festteil (20) ausgebildet ist, wird beispielsweise an einem Schwenkkopf eines Industrieroboters befestigt. Hierzu dient im Ausführungsbeispiel ein Bohrbild mit vier Befestigungsbohrungen (21) und einer Zentrierbohrung (22). An der z.B. untenliegenden Stirnseite (23) des Festteils (20) ist ein Zentrierbund (24) mit z.B. kreisförmiger Querschnittsfläche ausgebildet. Mittels dieses Zentrierbunds (24) und einem in der Zentrierbohrung (22) sitzenden Zentrierbolzen wird der Adapter (10) am Industrieroboter zentriert.

An dem z.B. als Losteil (60) ausgebildeten zweiten Teil (60) wird das Werkzeug befestigt. Hierzu hat das Losteil (60) an seiner Stirnseite (61) eine Werkzeugaufnahme (62) und eine z.B. ebene Auflagefläche (75). Weiterhin hat die Stirnseite (61) des Losteils (60) eine Zentrierausnehmung (63) und ein Befestigungsbohrbild (64). Hiermit kann das Werkzeug am Losteil (60) mittels Schrauben befestigt werden. Die Stirnseite (23) des Festteils (20) ist im Ausführungsbeispiel komplementär zur Stirnseite (61) des Losteils (60) ausgebildet. Es ist daher denkbar, das Werkzeug ohne Einsatz des Adapters (10) direkt am Industrieroboter zu befestigen.

Der trennbare Adapter (10) hat im Ausführungsbeispiel eine zumindest annähernd zylindrische Hüllkontur. Aus der Mantelfläche dieser Hüllkontur ragen im Ausführungsbeispiel zwei Verriegelungsteile (91) heraus. Diese beiden Verriegelungsteile (91) sind z.B. einander gegenüber am Losteil (60) angeordnet. Sie sind in einer Ebene normal zur Längsachse des Adapters (10) beispielsweise um 180 Grad versetzt zueinander angeordnet. Auch ein anderer Versatzwinkel der beiden Verriegelungsteile (91) relativ zueinander ist denkbar. Beispielsweise können sie in einem Bereich von um 90 Grad bis zu dem oben genannten Winkelzueinander versetzt sein. Die Verriegelungsteile (91, 111) haben radial nach außen zeigende Griffflächen (92). Diese Griffflächen (92) können eben oder gewölbt ausgebildet sein.

Oberhalb jedes Verriegelungsteils (91) hat das Losteil (60) je eine Greifausnehmung (65). Die einzelne Greifausnehmung (65) hat beispielsweise eine kreisabschnittsförmige Grundfläche (66) und eine konstante Höhe. Die Führungsflächen (67) beider Greifausnehmungen (65) sind zumindest bereichsweise parallel zueinander orientiert.

Am Losteil (60) ist im Ausführungsbeispiel ein elektrisches Kabel (68) mittels eines Steckers (69) angeschlossen. Hierüber können beispielsweise Steuer- und/oder Kontrollsignale zwischen dem Industrieroboter und dem Werkzeug ausgetauscht werden.

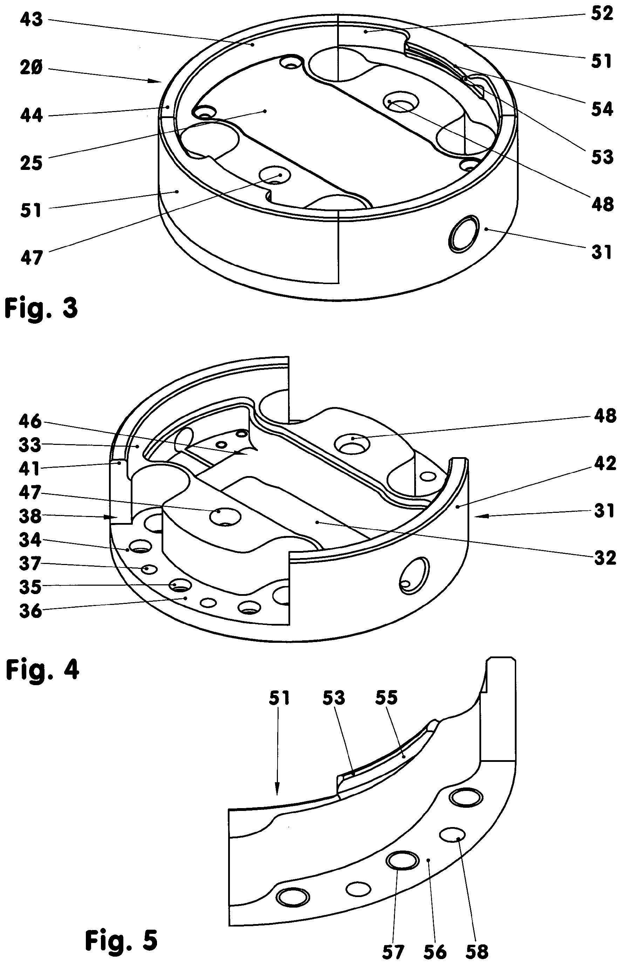

Die Figuren 2 und 3 zeigen das Festteil (20) in einer Draufsicht und in einer Unteransicht. Das Festteil (20) ist schalenförmig aufgebaut und hat eine zylindrische Außenwandung. Es hat einen Grundkörper (31), vgl. Figur 4, und zwei in den Grundkörper (31) eingesetzte Einsatzstücke (51), vgl. Figur 5. Ein Verschlussdeckel (25) verschließt einen Zentralbereich (46) des Festteils (20).

Der Grundkörper (31) hat einen Boden (32) und zwei außenliegende Wandbereiche (33). Zwischen den Wandbereichen (33) sind Einsenkungen (38) zur Aufnahme der Einsatzstücke (51) ausgebildet. Im Ausführungsbeispiel haben die beiden Einsenkungen (38) die gleiche Größe. Den Boden (32) durchdringen außer den Befestigungsbohrungen (21) zwei Gruppen (34) von jeweils drei Senkbohrungen (35). Diese Senkbohrungen (35) münden in Aufsetzflächen (36) der Einsenkungen (38). Zwischen den Senkbohrungen (35) sind Zentrierbohrungen (37) eingebracht.

Die Wandbereiche (33) sind zweistufig aufgebaut. Der an den Boden (32) angrenzende Bereich ist als Zylindermantel (42) ausgebildet. Auf dem Zylindermantel (42) sitzt ein Randsteg (43). Dieser Randsteg (43) bildet einen Teil einer Ringzentrierung (43, 81). Seine dem Boden (32) abgewandte Seite ist als ebene Fläche (44) ausgebildet. Die Ebene ist normal zur Längsachse (11) orientiert.

Die beiden Einsenkungen (38) überdecken jeweils einen Sektorwinkel von 90 Grad. Die in der Längsrichtung (12) orientierten Begrenzungsflächen (41) der Einsenkungen (38) sind beispielsweise radial zur Längsachse (11) orientiert.

Der Grundkörper (31) weist außerdem zwei außermittig angeordnete Führungselementaufnahmen (47, 48) auf. Diese Führungselementaufnahmen (47, 48) haben beispielsweise die gleiche Tiefe.

Sie sind parallel zur Längsachse (11) orientiert. Die Führungselementaufnahmen (47, 48) haben unterschiedliche Querschnitte. In den Darstellungen der Figuren 3 und 4 hat die links dargestellte Führungselementaufnahme (47) eine kleinere Querschnittsfläche als die rechts dargestellte Führungselementaufnahme (48).

Der Grundkörper (31) ist im Ausführungsbeispiel aus Aluminium hergestellt. Der Elastizitätsmodul dieses Werkstoffs beträgt beispielsweise 70000 Newton pro Quadratmillimeter.

Die beiden Einsatzstücke (51) sind im Ausführungsbeispiel identisch zueinander ausgebildet. Sie haben eine schalenabschnittsförmige Gestalt. Im oberen Bereich (52) weisen sie eine nach innen gerichteten Umgriffsrand (53) auf. Dieser Umgriffsrand (53) überdeckt einen Sektor von beispielsweise 36 Grad. Jeder Umgriffsrand (53) ist im Querschnitt keilförmig ausgebildet. Seine Oberseite (54) und seine Unterseite (55) schließen im Ausführungsbeispiel einen Winkel von 5 Grad ein. Die Scheitellinie dieses Winkels ist in Richtung der Längsachse (11) orientiert. Die Oberseite (54) liegt bei montiertem Einsatzstücken (51) in der Ebene der ebenen Fläche (44) der Randstege (43). Außerhalb und unterhalb des Umgriffsrandes (53) entspricht der Innendurchmesser der Einsetzstücke (51) dem Innendurchmesser des Randes (33) des Grundkörpers (31). Der Außendurchmesser der Einsatzstücke (51) entspricht dem Außendurchmesser des Grundkörpers (31). Im ihrer Bodenfläche (56) haben die Einsatzstücke (51) jeweils drei Gewindebohrungen (57) und zwei Zentrierbolzenaufnahmen (58).

Die Einsatzstücke (51) sind im Ausführungsbeispiel aus Stahl hergestellt. Der Elastizitätsmodul dieses Werkstoffs beträgt 210.000 Newton pro Quadratmillimeter. Dieser Elastizitätsmodul beträgt damit das Dreifache des Elastizitätsmoduls des Grundkörpers (31). Die Werkstoffe können so gewählt sein, dass der Elastizitätsmodul der Einsatzstücke (51) mehr als das Doppelte des Elastizitätsmoduls des Grundkörpers (31) beträgt. Es ist auch denkbar, die Einsatzstücke (51) als Austauschteile einzusetzen. Hierfür können sie beispielsweise aus einem Kunststoff hergestellt sein.

Beim Zusammenbau des Festteils (20) wird jedes der Einsatzstücke (51) in eine Einsenkung (38) eingesetzt. Zentrierbolzen und in die Senkbohrungen (35) eingesetzte Befestigungsschrauben (45) halten und sichern die Einsatzstücke (51). In den Zentralbereich (46) des Bodens kann beispielsweise eine elektrische Baugruppe eingesetzt werden. Dieser Zentralbereich (46) wird anschließend beispielsweise mittels des Verschlussdeckels (25) verschlossen.

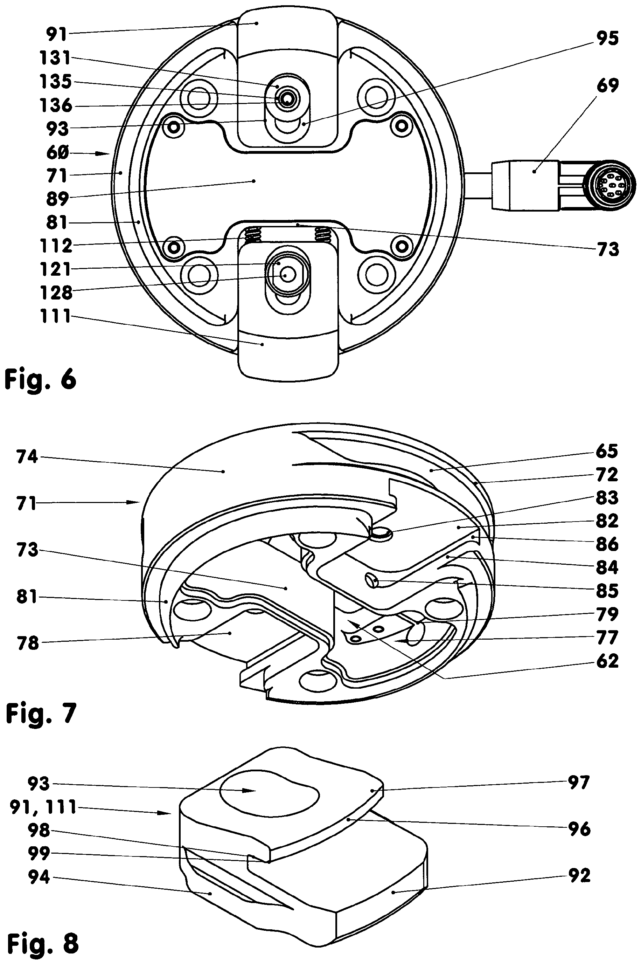

In der Figur 6 ist eine Unteransicht des Losteils (60) dargestellt. Das Losteil (60) umfasst einen Losteilkörper (71), zwei z.B. als Führungsbolzen (121, 131), Stifte oder Kegel ausgebildete Führungselemente (121, 131) und die zwei Verriegelungsteile (91, 111). Ein Deckelblech (89) verschließt die Innenseite der Werkzeugaufnahme (62). Die beiden Verriegelungsteile (91, 111) sind einander gegenüber angeordnet. Jedes der Verriegelungsteile (91; 111) ist im Losteilkörper (71) und in jeweils einem Führungsbolzen (121; 131) radial verschiebbar geführt. Für die Führung entlang der Führungsbolzen (121; 131) hat das einzelne Verriegelungsteil (91; 111) jeweils ein Führungslangloch (93). Jedes der Verriegelungsteile (91; 111) ist dabei mittels zweier Federelemente (112) abgestützt. Diese z.B. als Druckfedern (112) ausgebildeten Federelemente (112) belasten jeweils ein Verriegelungsteil (91; 111) radial nach außen. Die Federelemente (112) stützen sich hierbei jeweils an einem Abstützsteg (73) des Losteilkörpers (71) ab.

In der Darstellung der Figur 6 ist das obere Verriegelungsteil (91) eingeschoben dargestellt. Beispielsweise ist die Grifffläche (92) nahezu bündig zur Hüllkontur des Losteils (60). Hierbei sind die Druckfedern komprimiert. Der Hub des Verriegelungsteils (91) ist durch das Führungslangloch (93) und den Führungsbolzen (131) begrenzt.

Das untere Verriegelungsteil (111) ist in der Darstellung der Figur 6 mittels der Druckfedern (112) nach außen verschoben. Der Hub des Verriegelungsteils (111) in der äußeren Endlage ist mittels des Führungsbolzens (121) und des Führungslanglochs (93) begrenzt.

Die Figur 7 zeigt den Losteilkörper (71). Er hat ein Deckelteil (72) und einen Losteilkörperrand (74). Das Deckelteil (72) hat eine ebene Auflagefläche (75), vgl. Figur 1. In ihr ist ein Durchbruch für die Werkzeugaufnahme (62) eingebracht. Auf der Innenseite (77), vgl. Figur 7, grenzen die Abstützstege (73) die zentral angeordnete Werkzeugaufnahme (62) von zwei einander gegenüberliegenden Verriegelungsteil-Aufnahmen (78) ab. Der Losteilkörper (71) ist beispielsweise aus dem gleichen Werkstoff hergestellt wie der Grundkörper (31).

In die Werkzeugaufnahme (62) mündet ein Kabelkanal (79), an dessen Außenseite in den Darstellungen der Figuren 1 und 6 der Stecker (69) angeschlossen ist. Die Werkzeugaufnahme (62) ist umgeben vom Losteilkörperrand (74). Dieser ist zweistufig ausgebildet. Der in der Figur 7 nach unten herausragende Randbereich ist als Zentrierring (81) ausgebildet. Bei zusammengebauten Adapter (10) bildet er Teil einer Ringzentrierung (43, 81) .

Die Verriegelungsteil-Aufnahmen (78) haben jeweils eine ebene Gleitfläche (82). Die beiden Gleitflächen (82) liegen in einer gemeinsamen Ebene. Diese Ebene ist parallel zur Auflagefläche (75) des Losteils (60). In jeder der Gleitflächen (82) ist jeweils eine Gewindebohrung (83) eingebracht. Die jeweilige Gewindebohrung (83) liegt beispielsweise mittig zwischen den beiden Längsseiten (84) der Verriegelungsteil-Aufnahme (78). In jeder dieser Gewindebohrungen (83) wird einer der Führungsbolzen (121; 131) eingeschraubt. In den Abstützstegen (73) sind Federaufnahmen (85) eingeprägt. In diesen sitzen bei montiertem Losteil (60) die Druckfedern (112). In den Längsseiten (84) sind angrenzend an die Gleitflächen (82) Führungsnuten (86) ausgebildet.

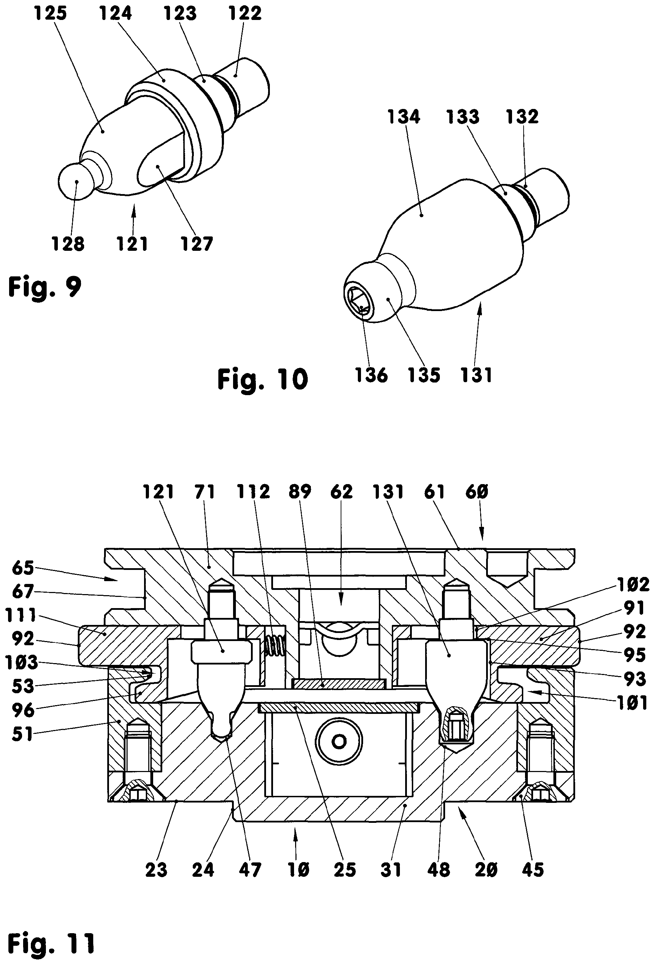

In der Figur 8 ist ein Verriegelungsteil (91; 111) dargestellt. Im Ausführungsbeispiel sind beide Verriegelungsteile (91; 111) identisch ausgebildet. Es ist aber auch denkbar, die beiden Verriegelungsteile (91, 111) z.B. mit unterschiedlicher Breite auszubilden. Das einzelne Verriegelungsteil (91; 111) hat das zentrale Führungslangloch (93) und zwei seitliche Führungsleisten (94). Das Führungslangloch (93) ist radial zur Längsachse (11) des Adapters (10) orientiert. Die Führungsleisten (94) liegen parallel zum Führungslangloch (93). Bei montiertem Losteil (60) sind die Führungsleisten (94) in den Führungsnuten (86) geführt. Das Führungslangloch (93) umgreift den jeweiligen Führungsbolzen (121; 131). Das einzelne Führungslangloch (93) ist mit einer Einsenkung (95) ausgebildet, vgl. Figuren 6 und 11.

An seiner Außenseite hat das Verriegelungsteil (91; 111) die Grifffläche (92). Oberhalb der Grifffläche (92) und zu dieser beabstandet ist in der Darstellung der Figur 8 ein auskragender Haken (96) angeordnet. Die Grifffläche (92) steht hierbei um 30 % der in radialer Richtung gemessenen Bauteillänge über den Haken (96) heraus. Der Haken (96) ist in einer Draufsicht auf das Verriegelungsteil (91; 111) bogenförmig ausgenbildet. Die Bogenlänge beträgt in einer Normalenebene zur Längsachse (11) 38 Grad. Der Haken (96) ist im Querschnitt keilförmig ausgebildet. Der Keilwinkel zwischen der Hakenoberseite (97) und der Hakenunterseite (98) beträgt im Ausführungsbeispiel 5 Grad. Dies ist auch die Größe des Winkels, den die Hakenunterseite (98) mit einer Normalenebene zur Längsachse (11) einschließt. An seinem freien Ende hat der Haken (96) eine an die Hakenunterseite (98) angrenzende Einführschräge (99). Der Winkel zwischen der Einführschräge (99) und der Hakenoberseite (97) beträgt im Ausführungsbeispiel 30 Grad. An seiner zur Längsachse (11) orientierten Rückseite kann das Verriegelungsteile (91; 111) Federaufnahmen aufweisen. Diese sind beispielsweise so ausgebildet wie die Federaufnahmen in den Abstützstegen (73). Die beiden Verriegelungsteile (91, 111) sind im Ausführungsbeispiel aus dem gleichen Werkstoff hergestellt wie die Einsatzstücke (51).

Die Figuren 9 und 10 zeigen die beiden Führungsbolzen (121, 131) des Ausführungsbeispiels. Die beiden Führungsbolzen (121, 131) haben unterschiedliche Gestalten. Der in der Figur 9 dargestellte Führungsbolzen (121) wird im Folgenden als erster Führungsbolzen (121) bezeichnet. Die Figur 10 zeigt dann den zweiten Führungsbolzen (131). Die beiden Führungsbolzen (121, 131) haben beispielsweise die gleiche Länge. Im Ausführungsbeispiel sind sie aus dem gleichen Werkstoff hergestellt wie die Einsatzstücke (51).

Der erste Führungsbolzen (121) hat ein Außengewinde (122), dessen Nennmaß dem Nennmaß der Gewindebohrungen (83) entspricht. An das Außengewinde (122) schließt ein Führungsbund (123) an, dessen Durchmesser größer ist als das Nennmaß der Gewindebohrung (83). Der Durchmesser des Führungsbundes (123) ist kleiner als die freie Breite des Führungslanglochs (93). An den Führungsbund (123) grenzt ein Auflagebund (124) an. Dieser Auflagebund (124) verhindert bei montiertem Verriegelungsteil (91; 111) u.a. ein Abheben oder Verkanten des Verriegelungsteils (91; 111) relativ zum Losteilkörper (71).

An den Auflagebund (124) des ersten Führungsbolzens (121) grenzt ein Montageabschnitt (125) an. Dieser hat im Ausführungsbeispiel zwei an seiner Mantelfläche angeordnete, zueinander parallele Schlüsselflächen (127). An den Montageabschnitt (125) schließt ein Führungsbolzenkopf (128) an. Dieser ist im Ausführungsbeispiel kalottenförmig ausgebildet.

Der zweite Führungsbolzen (131) hat ebenfalls ein Außengewinde (132) und einen Führungsbund (133). Diese sind so ausgebildet wie die entsprechenden Bereiche des ersten Führungsbolzens (121). Der Auflagebund (134) des zweiten Führungsbolzens (131) ist beispielsweise so lang ausgebildet wie die Summe der Längen des Auflagebunds (124) und des Montageabschnitts (125) des ersten Führungsbolzens (121). Der Führungsbolzenkopf (135) des zweiten Führungsbolzens (131) ist ebenfalls kalottenförmig ausgebildet. Sein Durchmesser ist jedoch größer als der Durchmesser des Führungsbolzenkopfs (128) des in der Figur 9 dargestellten Führungsbolzens (121). An seiner Stirnfläche hat der zweite Führungsbolzen (131) einen Innensechskant (136).

Beim Zusammenbau des Losteils (60) werden die Federelemente (112) in die Federaufnahmen (85) des Losteilkörpers (71) und der Verriegelungsteile (91; 111) eingesetzt. Die Verriegelungsteile (91, 111) werden in die Verriegelungsteil-Aufnahmen (78) eingeschoben, wobei die Führungsleisten (94) in den Führungsnuten (86) geführt werden. Hierbei werden die Federelemente (112) zusammengedrückt.

In das einzelne Verriegelungsteil (91; 111) wird ein Führungsbolzen (121; 131) eingesetzt. Dieser wird durch das Führungslangloch (93) des Verriegelungsteils (91; 111) hindurchgeschoben und in die zugehörigen Gewindebohrungen (83) eingeschraubt. Nach dem Loslassen der Verriegelungsteile (91, 111) werden diese mittels der Federelemente (112) nach außen geschoben. Der Haken (96) des einzelnen Verriegelungsteils (91; 111) zeigt nach außen. Im Losteilkörper (71) wird das Deckelblech (89) befestigt und an der Außenseite des Losteilkörpers (71) wird der Stecker (69) montiert. In das Losteil (60) kann abschließend ein Werkzeug eingesetzt werden und an diesem befestigt werden.

Um den Adapter (10) zu fügen, wird das Losteil (60) mit dem Festteil (20) verbunden. Dies kann manuell oder mittels einer Greifvorrichtung erfolgen. Beide Verriegelungsteile (91, 111) werden eingedrückt und damit das Losteil (60) gegriffen. Beim Einsatz einer Greifvorrichtung kann das Losteil (60) zusätzlich an den Greifausnehmungen (65) gehalten werden. Das Losteil (60) wird so an das Festteil (20) angesetzt, dass die Einsatzstücke (51) und die Verriegelungsteile (91; 111) übereinander stehen und der Zentrierring (81) des Losteils (60) innerhalb des Randstegs (43) des Festteils (20) steht. Beim weiteren Annähern des Losteils (60) an das Festteil (20) in der in der Längsrichtung (12) orientierten Montagerichtung (13) tauchen die Führungsbolzen (121, 131) in die Führungsbolzenaufnahmen (47, 48) des Festteils (20) ein. Aufgrund der unterschiedlichen geometrischen Ausbildung der beiden Führungsbolzen (121, 131) und der zugehörigen Führungsbolzenaufnahmen (47, 48) kann das Losteil (60) nur in einer Position auf das Festteil (20) geschoben werden. Auch andere strukturelle Lösungen zur Sicherstellung der radialen Orientierung des Losteils (60) relativ zum Festteil (20) sind denkbar. Sobald die Führungsbolzen (121, 131) in die Führungsbolzenaufnahmen (47, 48) eingetaucht sind, ist kein weiteres Verschieben des Losteils (60) relativ zum Festteil (20) in der Montagerichtung (13) möglich. Die in die Führungsbolzenaufnahmen (47, 48) eingesetzten Führungsbolzen (121, 131) zentrieren das Losteil (60) relativ zum Festteil (20) formschlüssig.

Die Figur 11 zeigt den Adapter (10) bei der Montage in einer Schnittdarstellung. Die beiden Führungsbolzen (121, 131) sitzen in den Führungsbolzenaufnahmen (47, 48). Das rechte Verschlussteil (91) ist in der Lösestellung (101) dargestellt. Dieses rechte Verschlussstück (91) liegt mit seinem Löseanschlag (102) am Führungsbolzen (131) an. Der Haken (96) liegt innerhalb des vom Umgriffsrand (53) begrenzten Zylinderabschnitts.

Beim Loslassen der Verriegelungsteile (91, 111) werden diese mittels der Federelemente (112) nach außen verschoben. Hierbei fährt der Haken (96) an den Umgriffsrand (53). Der Haken (96) gleitet mit seiner Hakenunterseite (98) entlang der Unterseite (55) des Umgriffsrands (53). Die beiden Keile ziehen das Losteil (60) und das Festteil (20) weiter in der Montagerichtung (13) zusammen. In der Darstellung der Figur 11 steht das linke Verschlussstück (111) in der Verriegelungsstellung (103). Der Haken (96) hintergreift den Umgriffsrand (53). Das Losteil (60) ist relativ zum Festteil (20) kraft- und formschlüssig gesichert.

Mit dem Fügen des Adapters (10) kann das Festteil (20) beispielsweise auch pneumatisch mit dem Losteil (60) verbunden werden. Hierzu können z.B. elastisch verformbare pneumatische Anschlüsse dienen, die beim Fügen komprimiert werden. Auch ist es denkbar, die pneumatische Verbindung durch die Führungsbolzen (121; 131) hindurch zu leiten. Auch können beim Fügen des Adapters (10) innerhalb des Adapters (10) z.B. elektrische und/oder hydraulische Leitungen miteinander verbunden werden. Damit können dann beispielsweise Laststrom, Signale, Daten, hydraulisches Medium, etc. übertragen werden, vgl.
DE 10 2017 009 319 B3.

Beim Betrieb des am Adapter (10) angeordneten Werkzeugs werden die Betriebskräfte über den Adapter (10) übertragen. In axialer Richtung werden die Kräfte über die Führungsbolzen (121, 131) übertragen. Hierbei werden diese axialen Kräfte von den Führungsbünden (123, 133) über die Führungsbolzenköpfe (128, 135) in den Boden (32) des Festteils (20) geleitet.

Querkräfte auf das Werkzeug werden ebenfalls über die Führungsbolzen (121, 131) geleitet. Diese Kräfte werden außerdem über die Verriegelungsteile (91, 111) und gegebenenfalls auch über die Ringzentrierung (43, 81) übertragen.

Drehmomente zwischen dem Festteil (20) und dem Losteil (60) werden im Wesentlichen über die Führungsbolzen (121, 131) übertragen. Die Reibung der kraftschlüssigen Verbindung zwischen den Verriegelungsteilen (91, 111) und den Umgriffsrändern (53) trägt ebenfalls zur Momentenübertragung bei.

Zum Wechseln des Werkzeugs wird der Adapter (10) getrennt. Dies kann manuell oder automatisch erfolgen.

Bei einem manuellen Werkzeugwechsel presst der Bediener die beiden Verriegelungsteile (91, 111) nach innen. Die Verriegelungsteile (91, 111) lösen sich von den Umgriffsrändern (53).

Das Werkzeug kann nun zusammen mit dem Losteil (60) vom Festteil (20) entgegen der Montagerichtung (13) abgenommen werden. Beispielsweise wird es in einem Magazin gelagert. Hierbei kann das Losteil (60) in den Greifausnehmungen (65) gehalten werden. Anschließend kann ein neues Werkzeug mit daran angeordnetem Losteil (60) aus dem Magazin entnommen werden. Die Montage am Festteil (20) erfolgt, wie oben beschrieben.

Bei einem automatischen Werkzeugwechsel kann das Losteil (60) z.B. mittels eines starren Gabelgreifers zunächst in den Greifausnehmungen (65) gehalten werden. Ein Greifer mit beweglichen Greifbacken presst die beiden Verriegelungsteile (91, 111) relativ zueinander. Das Trennen des Losteils (60) vom Festteil (20) erfolgt, wie oben beschrieben. Auch in diesem Fall kann das entnommene Werkzeug mit dem daran befestigten Losteil (60) in ein Magazin eingesetzt werden. Nach dem Einsetzen des Losteils (60) in das Magazin werden die Greifbacken des Greifers entlastet. Die Verriegelungsteile (91, 111) des Losteils (60) verfahrene in ihre ausgefahrene Grundstellung. Das neue Werkzeug mit einem daran befestigten Losteil (60) kann ebenfalls mittels des Greifers mit beweglichen Greifbacken aus dem Magazin entnommen werden. Beim Greifen des Losteils (60) pressen die Greifbacken die Verriegelungsteile (91, 111) zusammen. Das Losteil (60) mit dem daran befestigten Werkstück wird an das Festteil (20) angesetzt, wie oben beschrieben. Nachdem das Losteil (60) bei eingedrückten Verriegelungsteilen (91, 111) den Anschlag am Festteil (20) erreicht hat, werden die Greifbacken entlastet. Die Verriegelungsteile (91, 111) hintergreifen die Umgriffsränder (53) und sichern das Losteil (60) am Festteil (20).

Für einen automatischen oder einen manuellen Werkzeugwechsel kann der Adapter (10) auch in eine Entriegelungsaufnahme eingeschoben werden. Diese greift beispielsweise in die Greif- oder Führungsausnehmung (65) ein. Die Entriegelungsaufnahme ist beispielsweise keilförmig ausgebildet. Beim Einschieben des Adapters (10) in die Entriegelungsaufnahme werden die beiden Verriegelungsteile (91, 111) betätigt. Hierbei können die Betätigungselemente (91, 111) geringfügig gegeneinander versetzt sein oder bis zu einem Halbkreiswinkel zueinander versetzt angeordnet sein. Das Trennen des ersten Teils (20) und des zweiten Teils (60) erfolgt dann wie oben beschrieben.

Die Betätigung der Verriegelungsteile (91, 111) kann auch z.B. von einer der Stirnseiten (23, 24) aus erfolgen. Beispielsweise werden die Verriegelungsteile (91, 111) hierbei beim Eindrücken von Keilschiebern nach innen verschoben. Die äußere Kraft wird in diesem Fall mittels eines Keilgetriebes auf die Verriegelungsteile (91, 111) übertragen. Das Trennen des ersten Teils (20) und des zweiten Teils (60) erfolgt dann, wie oben beschrieben.

Die Betätigung der Entriegelung kann auch mittels eines einzelnen Drucktasters erfolgen. Beim Eindrücken dieses Tasters werden alle Verriegelungsteile (91, 111) unter zusätzlicher Belastung der Federelemente (112) gleichzeitig verschoben. Hierbei lösen sich die jeweiligen formschlüssigen Hintergriffe.

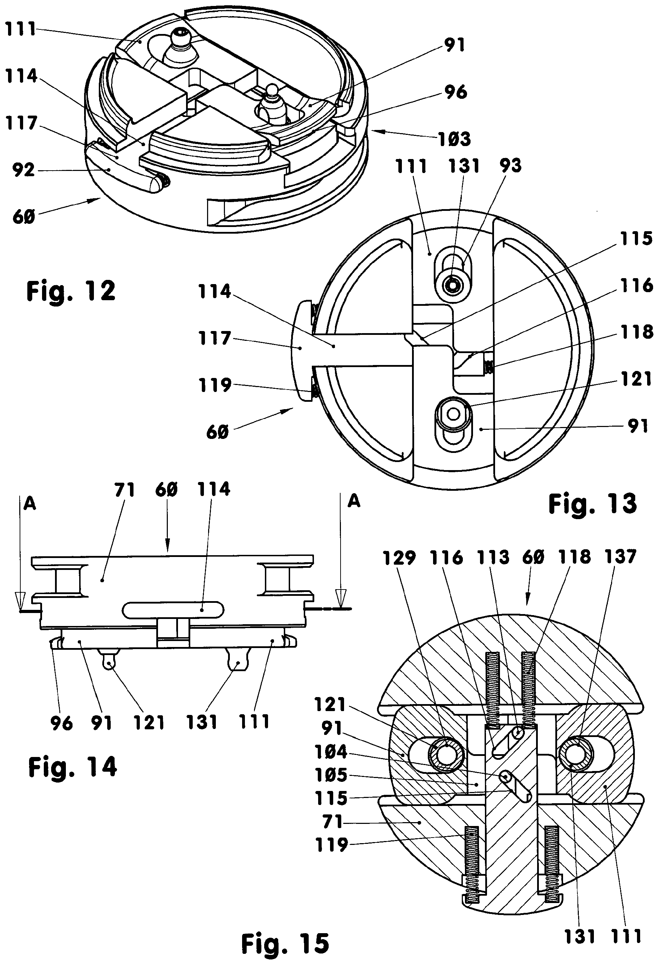

Die Figuren 11 - 15 zeigen eine Variante eines Losteils (60) mit zwei Verriegelungsteilen (91, 111), die gemeinsam mittels eines Tasters (114) betätigbar sind. Die äußeren Abmessungen des Losteils (60) entsprechen den äußeren Abmessungen des in der Figur 6 dargestellten Losteils (60). Beispielsweise kann das in den Figuren 11 - 15 dargestellte Losteil (60) mit dem in den Figuren 2 und 3 dargestellten Festteil (20) kombiniert werden.

Die beiden Verriegelungsteile (91, 111) sind jeweils sind im Losteil (60) verschiebbar gelagert und mittels der im Losteil (60) befestigten Führungselemente (121, 131) geführt. Die Führungselemente (121, 131) sind z.B. hohl mit einem innenliegenden Kanal (129, 137) ausgebildet. Das jeweilige Führungslangloch (93) und die Haken (96) sind so ausgebildet wie im Zusammenhang mit dem ersten Ausführungsbeispiel beschrieben. Jedes der Verriegelungsteile (91; 111) hat einen Mitnahmezapfen (104; 113), der jeweils in ein Mitnahmelangloch (115; 116) des Tasters (114) eingreift. Der einzelne Mitnahmezapfen (104; 113) sitzt auf einem Steg (105) des Verriegelungsteils (91; 111).

Der Taster (114) hat ein radial nach außen aus dem Losteil (60) herausragendes Griffteil (117) mit einer Griffläche (92). Er ist im Ausführungsbeispiel mittels vier Federelementen (118, 119) in die ausgefahrene Stellung belastet. Zwei dieser als Druckfedern (118) ausgebildeten Federelemente (118) stützen den Körper des Tasters (114) gegen den Losteilkörper (71) ab. Die anderen beiden, ebenfalls als Druckfedern (119) ausgebildeten Federelemente (119), sind zwischen dem Losteilkörper (71) und dem Griffteil (117) angeordnet. Die beiden Mitnahmelanglöcher (115, 116) sind im Ausführungsbeispiel V-förmig zueinander angeordnet. Der von den beiden Mitnahmelanglöchern (115, 116) eingeschlossene Winkel beträgt beispielsweise 90 Grad. Die Mitnahmezapfen (104, 113) liegen jeweils am dem dem Haken (96) zugewandten Ende des Mitnahmelanglochs (115, 116).

In der dargestellten Verriegelungsstellung (103) drücken die Federelemente (118, 119) über die Zwangsführung (104, 115; 113, 116) der Mitnahmelanglöcher (115, 116) und der Mitnahmezapfen (104, 113) beide Verriegelungsteile (91, 111) z.B. radial nach außen. Alle Druckfedern (118, 119) sind gegenüber ihrem entspannten Zustand teilbelastet und teilkomprimiert. Wird der Taster (114) mittels einer äußeren Druckkraft eingeschoben, wird die Belastung der Druckfedern (118, 119) erhöht. Der Taster (114) verschiebt über die Zwangsführungen (104, 115; 113, 116) beide Verriegelungsteile (91, 111) zur Mitte hin. Beispielsweise lösen sich die Haken (96) der Verriegelung. Nach der Wegnahme der manuell oder automatisiert aufgebrachten äußeren Kraft werden die Verriegelungsteile (91, 111) wieder federbelastet in die Verriegelungsstellung (103) verschoben.

Das einzelne federbelastete Verriegelungsteil (91; 111) kann auch in einer Schwenkbewegung z.B. um die Längsachse (11) das Festteil (20) oder das Losteil (60) hintergreifen. Hierbei haben zumindest zwei Verriegelungsteile (91, 111) die gleiche Schwenkrichtung. Die Verriegelungsteile (91; 111) können beispielsweise starr miteinander verbunden sein und gemeinsam mittels eines Federelements (112) zum Verriegeln belastet werden. Auch in diesem Ausführungsbeispiel umgreift jedes Verriegelungsteil (91; 111) jeweils ein Führungselement (121; 131). Beim Verschwenken wird das Betätigungselement (91; 111) entlang dieses Führungselements (121; 131) geführt. Zum Lösen der Verriegelung wird eine Druckkraft entweder auf einen oder auf mehrere Taster ausgeübt. Die Übertragung der Kräfte auf die einzelnen Verriegelungsteile (91; 111) erfolgt, wie oben beschrieben.

Die Betätigung kann auch mittels eines z.B. um die Längsachse (11) schwenkbaren Scheibensegments mit nach außen ragender Nase erfolgen. Dieses kann Teil eines federbelasteten Verriegelungsteils (91, 111) sein oder dieses betätigen. Auch die Betätigung beider Verriegelungsteile (91, 11) mittels eines einzelnen Scheibensegments ist denkbar.

Bei allen Varianten ist auch die Zwischenschaltung eines elektrischen Antriebs und/oder eines Getriebes denkbar.

Es ist auch denkbar, den Adapter (10) derart auszubilden, dass ein Verriegelungsteil (91; 111) und das zugehörige Führungselement (121) im ersten Teil (20) oder im zweiten Teil (60) gelagert ist. Das zweite Verriegelungsteil (111; 91) und das zugehörige Führungselement (131) sind dann im jeweils anderen Teil (60; 20) gelagert. Entsprechend sind die Führungselementaufnahmen (47, 48) in dem Teil (60; 20) angeordnet, in dem das zugeordnete Führungselement (121; 131) nicht befestigt ist.

Der Adapter (10) kann auch mit mehr als zwei Verriegelungsteilen (91, 111) ausgebildet sein. Ein im Festteil (20) gelagertes und geführtes Verriegelungsteil (91, 111) hintergreift dann das Losteil (60). Ein im Losteil (60) gelagertes und geführtes Verriegelungsteil (91; 111) hintergreift das Festteil (20). Jedes der Verriegelungsteile (91, 111) ist mittels eines Führungselements (121; 131) geführt und einzeln, gruppenweise oder gemeinsam mit den anderen Verriegelungsteilen (91, 111) in der Verriegelungsrichtung federbelastet.

Der trennbare Adapter (10) bildet eine Schnittstelle zwischen einem Industrieroboter und z.B. einem Werkzeug. Hierbei ist ein Teil, z.B. das erste Teil (20), als Festteil (20) roboterseitig und das andere Teil, z.B. das zweite Teil (60), als Losteil (60) werkzeugseitig angeordnet. Um das Losteil (60) vom Festteil (20) zu trennen, werden beide Verriegelungsteile (91, 111) entgegen der Federkraft mittels einer äußeren Kraft direkt oder indirekt entgegen der als Verriegelungskraft wirkenden Federkraft belastet. Das Losteil (60) kann nun z.B. in der Längsrichtung (15) des Adapters (10) herausgenommen werden.

Um ein Losteil (60) mit dem Festteil (20) zu verbinden, werden die Verriegelungsteile (91, 111) entgegen der Federkraft in eine Lösestellung verfahren. Das Losteil (60) und das Festteil (20) werden z.B. in der Längsrichtung (15) des Adapters (10) zueinander bewegt, bis sie ihre Betriebsposition erreichen. Mit dem Entlasten der Verriegelungsteile (91, 111) werden diese Verriegelungsteile (91, 111) mittels des Federelements (112) oder der Federelemente verschoben, bis sie das Festteil (20) hintergreifen.

Die mindestens zwei federbelasteten Verriegelungsteile (91, 111) können unabhängig voneinander, gruppenweise oder gemeinsam betätigbar sein. Die Führungselemente (121, 131) und die Führungselementaufnahmen (47, 48) bestimmen die Demontage- und die Montagerichtung. Damit ist sichergestellt, dass sowohl bei einem manuellen als auch bei einem automatischen Trennen und Fügen des Adapters (10) alle Verriegelungsteile (91, 111) betätigt werden.

Im Magazin (240) sitzt in mindestens einer Werkzeugaufnahme (241) ein werkzeugtragendes zweites Teil (60) des Adapters (10). Die Tragschienen (243) halten das zweite Teil (60) in den Trag- und Führungsschienen (65). Der Abstand der Tragschienen (243) zueinander ist kleiner als der Durchmesser des zweiten Teils (60). Die Betätigungsleisten (244) liegen an den Griffflächen (92) der Verriegelungsteile (91, 111) an. Der Abstand der Betätigungsleisten (244) zueinander ist in diesem, an den Boden (245) angrenzenden Bereich kleiner als der Abstand der Außenflächen der Griffteile (92) zueinander. Die Werkzeugaufnahme (241) belastet damit die Verriegelungsteile (91, 111), die nach innen verschoben sind und die an den Verriegelungsteilen (91, 111) anliegenden Federelemente (112). Die Federelemente (112) sind komprimiert. Um ein System, bestehend aus einem zweiten Teil (60) und einem daran hängenden Werkzeug (250) aus dem Magazin (240) zu entnehmen, verfährt der Industrieroboter (220) über die entsprechende Werkzeugaufnahme (241) des Magazins (240). Das am Industrieroboter (220) hängende erste Teil (20) steht dann vertikal über dem werkzeugtragenden zweiten Teil (60). Das erste Teil (20) wird abgesenkt, bis es auf dem zweiten Teil (60) aufliegt. Während des Absenkens sind die Führungselemente (121, 131) in die Führungsausnehmungen (47, 48) eingedrungen. Beispielsweise kann der Industrieroboter (220) bei der Kontaktierung elektrisch die Codierung des am zweiten Teil (60) angeordneten Werkzeugs (250) prüfen. Hierzu und zur Steuerung der Greifelemente (251) werden beispielsweise die elektrischen Kontakte (76) des zweiten Teils (60) eingesetzt, vgl. die Figuren 19 und 20. Das erste Teil (20) hat z.B. zu diesen Kontakten (76) komplementäre Kontaktstifte.

Der Industrieroboter (220) zieht mittels des ersten Teils (20) das zweite Teil (60) mit dem daran angeschlossenen Werkzeug (250) in die vom Boden (245) abgewandte Richtung der Werkzeugaufnahme (241). Hierbei wird das zweite Teil (60) entlang der Tragschienen (243) verschoben. Sobald die Griffflächen (92) der Verriegelungsteile (91, 111) in den Bereich der Einführschienen (246) gelangen, wird die Belastung der Federelemente (112) aufgehoben. Die Verriegelungsteile (91, 111) werden mittels der Federelemente (112) nach außen verschoben, sodass sie die Umgriffsränder (53) des ersten Teils (20) hintergreifen. Beispielsweise wird die radiale Lage des Verriegelungsteils (91, 111) mittels eines Sensors geprüft, bevor der Industrieroboter (220) das System vollständig aus dem Magazin (240) entnimmt. Damit ist die Kupplung der beiden Teile (20, 60) des Adapters (10) gesichert.

Beim Ablegen des Systems aus zweitem Teil (60) und Werkzeug (250) in eine Werkzeugaufnahme (241) des Magazins (240) führt der Industrieroboter (220) dieses so ein, dass die Tragschienen (243) in die Greif- und Führungsausnehmungen (65) eingreifen. Der Adapter (10) ist weiterhin verriegelt. Der Abstand der Einführschienen (246) ist am freien Ende der Schenkel (242) der Werkzeugaufnahme (241) größer als der Abstand der Griffflächen (92) des zweiten Teils (60). Beim weiteren Einschieben des Systems kontaktieren die Griffelemente (92) die Einführschienen (246). Die Verriegelungsteile (91, 111) werden unter Belastung der Federelemente (112) z.B. radial nach innen verschoben. Der Adapter (10) ist entsichert. Sobald das System beispielsweise am Boden (245) oder an einem Anschlag anschlägt, kann der Industrieroboter (220) das roboterseitig befestigte erste Teil (20) vertikal anheben. Der Adapter (10) wird damit getrennt.

Auch Kombinationen der einzelnen Ausführungsbeispiele sind denkbar.

### Bezugszeichenliste:

- 10: Trennbarer Adapter
- 11: Längsachse
- 12: Längsrichtung
- 13: Montagerichtung von (60) relativ zu (20)

- 20: Festteil, erstes Teil
- 21: Befestigungsbohrungen
- 22: Zentrierbohrung
- 23: Stirnseite, Unterseite
- 24: Zentrierbund
- 25: Verschlussdeckel

- 31: Grundkörper
- 32: Boden
- 33: Ränder, Wandbereiche
- 34: Gruppen von Senkbohrungen
- 35: Senkbohrungen
- 36: Aufsetzflächen
- 37: Zentrierbohrungen
- 38: Einsenkungen

- 41: Begrenzungsflächen
- 42: Zylindermantel
- 43: Randsteg, Teil der Ringzentrierung (43, 81)
- 44: ebene Fläche
- 45: Befestigungsschrauben
- 46: Zentralbereich
- 47: Führungselementaufnahme
- 48: Führungselementaufnahme

- 51: Einsatzstücke
- 52: oberer Bereich von (51)
- 53: Umgriffsrand
- 54: Oberseite von (53)
- 55: Unterseite von (53)
- 56: Bodenfläche
- 57: Gewindebohrungen
- 58: Zentrierbolzenaufnahmen

- 60: Losteil, zweites Teil
- 61: Stirnseite
- 62: Werkzeugaufnahme
- 63: Zentrierausnehmung
- 64: Befestigungsbohrbild
- 65: Greif- oder Führungsausnehmung
- 66: Grundfläche
- 67: Führungsflächen
- 68: elektrisches Kabel
- 69: Stecker

- 71: Losteilkörper
- 72: Deckelteil
- 73: Abstützsteg
- 74: Losteilkörperrand
- 75: Auflagefläche
- 76: elektrische Kontakte
- 77: Innenseite
- 78: Verriegelungsteil-Aufnahmen
- 79: Kabelkanal

- 81: Zentrierring, Teil der Ringzentrierung (43, 81)
- 82: Gleitflächen
- 83: Gewindebohrung
- 84: Längsseiten
- 85: Federaufnahmen
- 86: Führungsnuten
- 89: Deckelblech

- 91: Verriegelungsteile
- 92: Griffflächen
- 93: Führungslangloch
- 94: Führungsleisten
- 95: Einsenkung
- 96: Haken
- 97: Hakenoberseite
- 98: Hakenunterseite
- 99: Einführschräge

- 101: Lösestellung
- 102: Löseanschlag
- 103: Verriegelungsstellung
- 104: Mitnahmezapfen, Teil der Zwangsführung (104, 115)
- 105: Steg

- 111: Verriegelungsteil
- 112: Federelemente, Druckfedern
- 113: Mitnahmezapfen, Teil der Zwangsführung (113, 116)
- 114: Taster
- 115: Mitnahmelangloch, Teil der Zwangsführung (104, 115)
- 116: Mitnahmelangloch, Tel der Zwangsführung (113, 116)
- 117: Griffteil
- 118: Federelemente, Druckfedern
- 119: Federelemente, Druckfedern

- 121: Führungselement, erstes Führungselement, Führungsbolzen
- 122: Außengewinde
- 123: Führungsbund
- 124: Auflagebund
- 125: Montageabschnitt
- 127: Schlüsselfläche
- 128: Führungsbolzenkopf
- 129: Kanal

- 131: Führungselement, zweites Führungselement, Führungselement
- 132: Außengewinde
- 133: Führungsbund
- 134: Auflagebund
- 135: Führungsbolzenkopf
- 136: Innensechskant
- 137: Kanal

- 200: Arbeitsvorrichtung

- 210: Tragvorrichtung

- 220: Industrieroboter
- 221: rotatorische Achse, A-Achse
- 222: rotatorische Achse, B-Achse
- 223: rotatorische Achse, C-Achse
- 224: translatorische Achse, D-Achse
- 225: rotatorische Achse, E-Achse
- 226: rotatorische Achse, F-Achse
- 227: Handteller

- 240: Magazin
- 241: Werkzeugaufnahmen
- 242: Schenkel
- 243: Tragschiene
- 244: Betätigungsleiste
- 245: Boden
- 246: Einführschiene
- 250: Werkzeug, Handhabungswerkzeug
- 251: Greifwerkzeuge

## Patentansprüche

1. Arbeitsvorrichtung (200) mit einer mindestens einen Industrieroboter (220) tragenden Tragvorrichtung (210),
- wobei am Industrieroboter (220) ein erstes Teil (20) eines aus diesem ersten Teil (20) und einem lösbar mit diesem verbindbaren zweiten Teil (60) bestehenden trennbaren Adapters (10) angeordnet ist,
- wobei auf der Tragvorrichtung (210) mindestens ein Magazin (240) mit einer Vielzahl von Werkzeugaufnahmen (241) angeordnet ist,
- wobei in mindestens einer Werkzeugaufnahme (241) ein werkzeugtragendes zweites Teil (60) des trennbaren Adapters (10) sitzt,
- wobei das zweite Teil (60) mindestens ein mittels eines Federelements (112; 118; 119) zum Hintergreifen des ersten Teils (20) belastbares verschwenkbares oder verschiebbares Verriegelungsteil (91; 111) aufweist und
- wobei die Werkzeugaufnahme (241) das Federelement (112; 118; 119) belastet, **dadurch gekennzeichnet,**
- **dass** das zweite Teil (60) mindestens zwei federbelastete Verriegelungsteile (91, 111) aufweist, wobei jedes der Verriegelungsteile (91, 111) jeweils ein Führungselement (121; 131) umgreift und
- **dass** jedes der Führungselemente (121; 131) formschlüssig in jeweils einer Führungselementaufnahme (47; 48) des ersten Teils (20) aufnehmbar ist.

2. Arbeitsvorrichtung (200) nach Anspruch 1, **dadurch gekennzeichnet, dass** die Tragvorrichtung (210) verfahrbar ist.

3. Arbeitsvorrichtung (200) nach Anspruch 1, **dadurch gekennzeichnet, dass** die Tragvorrichtung (210) selbstfahrend ist.

4. Arbeitsvorrichtung (200) nach Anspruch 1, **dadurch gekennzeichnet, dass** sie ein Positions- und Lageerkennungsmodul hat.

5. Arbeitsvorrichtung (200) nach Anspruch 1, **dadurch gekennzeichnet, dass** der mindestens eine Industrieroboter (220) ein 6-Achs-Roboter mit einer RRR-Kinematik ist.

6. Arbeitsvorrichtung (200) nach Anspruch 1, **dadurch gekennzeichnet, dass** das zweite Teil (60) des trennbaren Adapters (10) ein Handhabungswerkzeug (250), ein Bearbeitungswerkzeug oder ein Messwerkzeug trägt.

7. Arbeitsvorrichtung (200) nach Anspruch 1, **dadurch gekennzeichnet, dass** die einzelne Werkzeugaufnahme (241) mindestens eine Einführschiene (246) hat.

8. Arbeitsvorrichtung (200) nach Anspruch 1, **dadurch gekennzeichnet, dass** die beiden Führungselemente (121, 131) unterschiedliche Gestalten aufweisen.

## Claims

1. A working device (200) having a supporting device (210) supporting at least one industrial robot (220),
- wherein a first part (20) of a separable adapter (10) that consists of this first part (20) and a second part (60) that can be connected detachably thereto is arranged on the industrial robot (220),
- wherein at least one magazine (240) having a plurality of tool holders (241) is arranged on the supporting device (210),
- wherein a tool-holding second part (60) of the separable adapter (10) sits in at least one tool holder (241),
- wherein the second part (60) has at least one pivotable or slidable locking part (91; 111), which can be loaded by means of a spring element (112; 118; 119) to engage behind the first part (20), and
- wherein the tool holder (241) loads the spring element (112; 118; 119), **characterised in that**
- the second part (60) has at least two spring-loaded locking parts (91, 111), wherein each of the locking parts (91, 111) fits around one guide element (121; 131), and
- each of the guide elements (121; 131) can in each case be received form-fittingly in one guide element receptacle (47; 48) of the first part (20).

2. The working device (200) according to Claim 1, **characterised in that** the supporting device (210) is movable.

3. The working device (200) according to Claim 1, **characterised in that** the supporting device (210) is self-propelled.

4. The working device (200) according to Claim 1, **characterised in that** it has a location- and position-sensing module.

5. The working device (200) according to Claim 1, **characterised in that** the at least one industrial robot (220) is a 6-axis robot with RRR kinematics.

6. The working device (200) according to Claim 1, **characterised in that** the second part (60) of the separable adapter (10) supports a handling tool (250), a machining tool or a measuring tool.

7. The working device (200) according to Claim 1, **characterised in that** the individual tool holder (241) has at least one insertion rail (246).

8. The working device (200) according to Claim 1, **characterised in that** the two guide elements (121, 131) have different shapes.

## Revendications

1. Dispositif de travail (200), comprenant un dispositif de support (210) portant au moins un robot industriel (220),
- sur le robot industriel (220) étant placée une première partie (20) d'un adaptateur (10) désolidarisable, constitué de ladite première partie (20) et d'une deuxième partie (60) susceptible d'être assemblée de manière amovible avec celle-ci,
- sur le dispositif de support (210) étant placé au moins un magasin (240), pourvu d'une pluralité de porte-outils (241),
- dans au moins un porte-outil (241) étant logée une deuxième partie (60) portant un outil de l'adaptateur (10) désolidarisable,
- la deuxième partie (60) comportant au moins une pièce de verrouillage (91 ; 111) pivotante ou déplaçable, susceptible d'être contrainte par un élément à ressort (112 ; 118 ; 119), destiné à accrocher par l'arrière la première partie (20) et
- le porte-outil (241) contraignant l'élément à ressort (112 ; 118 ; 119), **caractérisé**
- **en ce que** la deuxième partie (60) comporte au moins deux pièces de verrouillage (91, 111) contraintes par ressort, chacune des pièces de verrouillage (91, 111) entourant respectivement un élément de guidage (121 ; 131) et
- **en ce que** chacun des éléments de guidage (121 ; 131) est susceptible d'être réceptionné par complémentarité de forme dans respectivement un logement (47 ; 48) d'élément de guidage de la première partie (20).

2. Dispositif de travail (200) selon la revendication 1, **caractérisé en ce que** le dispositif de support (210) est déplaçable.

3. Dispositif de travail (200) selon la revendication 1, **caractérisé en ce que** le dispositif de support (210) est automoteur.

4. Dispositif de travail (200) selon la revendication 1, **caractérisé en ce qu'**il possède un module de reconnaissance de position ou d'emplacement.

5. Dispositif de travail (200) selon la revendication 1, **caractérisé en ce que** l'au moins un robot industriel (220) est un robot à 6 axes, avec une cinématique RRR.

6. Dispositif de travail (200) selon la revendication 1, **caractérisé en ce que** la deuxième partie (60) de l'adaptateur (10) désolidarisable porte un outil de manipulation (250), un outil d'usinage ou un outil de mesure.

7. Dispositif de travail (200) selon la revendication 1, **caractérisé en ce que** le porte-outil (241) individuel possède au moins un rail d'introduction (246).

8. Dispositif de travail (200) selon la revendication 1, **caractérisé en ce que** les deux éléments de guidage (121, 131) présentent des conformations différentes.
